# FASCICULE DE BREVET EUROPEEN

(11) **EP 3 678 923 B1**
(45) Date de publication et mention de la délivrance du brevet: **22.05.2024**
(21) Numéro de dépôt: 18765440.5
(22) Date de dépôt: 06.09.2018
(51) Int. Cl.: B62D 35/00, B62D 37/02, B60J 5/10

(54) **OUVRANT ARRIÈRE DE VÉHICULE AUTOMOBILE COMPRENANT UN MODULE AMOVIBLE**
HECKVERSCHLUSSSYSTEM EINES KRAFTFAHRZEUGS MIT EINEM ABNEHMBAREN MODUL
REAR CLOSURE SYSTEM OF A MOTOR VEHICLE COMPRISING A REMOVABLE MODULE

(30) Priorité: 08.09.2017 FR 1758289
(43) Date de publication de la demande: 15.07.2020
(73) Titulaire: Compagnie Plastic Omnium, 69007 Lyon (FR)
(72) Inventeur: LETERRIER, Franck, 01150 Lagnieu (FR)
(74) Mandataire: LLR
(86) Numéro de dépôt international: PCT/EP2018/074074
(87) Numéro de publication internationale: WO 2019/048581

(56) Documents cités:
- DE-A1-102008 062 150
- FR-A1- 2 874 579

## Description

L'invention concerne les ouvrants arrière de véhicules automobiles.

On entend par ouvrant arrière le panneau arrière d'un véhicule automobile capable de s'ouvrir de haut en bas ou de bas en haut.

On connaît des ouvrants arrière comprenant une lame aérodynamique, c'est-à-dire un élément de carrosserie transversal améliorant les performances aérodynamiques du véhicule en décalant vers l'arrière du véhicule les points de décollement de l'air. Cette lame aérodynamique peut être soit fixe soit apte à se déployer et à se rétracter en fonction de différents paramètres comme par exemple la vitesse du véhicule et peut être actionnée par un mécanisme motorisé.

On connaît également des ouvrants arrière mobiles entre une position ouverte et une position fermée dont les mouvements d'ouverture et de fermeture sont assurés par un mécanisme motorisé.

Dans les deux cas de figures présentés ci-dessus, les différents éléments cités ci-dessus peuvent être placés au niveau du becquet de l'ouvrant arrière. On appelle becquet (ou spoiler en anglais) une pièce de carrosserie formant une extension du toit positionnée sur l'arrière d'un véhicule, et destinée à améliorer les performances aérodynamiques du véhicule sur laquelle cette pièce est placée. Les becquets sont également utilisés pour des aspects esthétiques (style) du véhicule. Ils sont situés et fixés en partie haute et arrière du véhicule entre le toit et le bord supérieur de la lunette, sur l'ouvrant arrière dans notre cas de figure.

Le becquet peut être formé par un panneau extérieur situé en zone haute de l'ouvrant arrière, appelé « panneau supérieur », panneau fixé sur la doublure de l'ouvrant arrière (par exemple par collage) (i.e. la pièce formant la partie interne ou doublure de l'ouvrant arrière. Un espace libre interne peut être formé par la réunion du panneau supérieur et de la doublure. C'est dans cet espace libre que vont être placés différents dispositifs constitués des éléments et mécanismes mentionnés auparavant (lame aérodynamique mobile, mécanismes motorisés, etc.).

Cependant, l'ouvrant arrière obtenu présente quelques inconvénients.

En effet, il est possible qu'un dispositif monté dans l'espace libre soit défectueux. Il faudrait alors, pour le réparer ou le remplacer, désolidariser le panneau supérieur de la doublure puis, après réparation ou remplacement, resolidariser le panneau supérieur à la doublure tout en conservant un aspect esthétique optimal. Ces opérations sont a *minima* très difficile voire non réalisables lors d'une intervention de réparation dans un garage automobile. En cas de tentative de réparation, cette dernière aura un coût également important en plus de la forte probabilité de perte d'un aspect esthétique optimal. D'autre part, en cas de chocs avec un autre véhicule ou un obstacle ayant pour conséquence d'endommager l'ouvrant arrière, ce dernier est remplacé dans son intégralité et les dispositifs qui y sont intégrés sont jetées. Ces deux cas de figure ont un coût relativement important.

Un but de l'invention est donc de fournir un ouvrant arrière dans lequel l'accès aux dispositifs situés au niveau du becquet de l'ouvrant arrière motorisé soit simplifié.

L'invention a dans ce but pour objet un ouvrant arrière de véhicule automobile selon la revendication 1.

Ainsi, l'accès aux dispositifs contenus dans le module est simplifié. En effet, en cas de dysfonctionnement des dispositifs contenus dans ce dernier, il est possible de retirer le module de l'ouvrant arrière afin de procéder aux différentes réparations ou au remplacement de ce dernier. Il n'est par conséquent plus nécessaire d'envisager de démonter le panneau supérieur au risque de dégrader l'aspect esthétique du becquet ni de devoir remplacer tout l'ouvrant arrière.

En cas de chocs conduisant à une détérioration de l'ouvrant arrière nécessitant son remplacement, il est possible de récupérer le module afin de le réutiliser facilement et ce au lieu de le jeter avec l'ouvrant arrière.

Enfin, il est possible d'envisager que des fonctions telles que l'ouverture motorisée de l'ouvrant arrière ou encore la présence d'une lame aérodynamique mobile soient des options insérées seulement si l'acquéreur du véhicule le souhaite. Il est alors possible de standardiser la fabrication du corps principal en plaçant dans l'espace libre un module vide ou comprenant tout ou partie des dispositifs cités ci-dessus (lame aérodynamique mobile, mécanisme d'ouverture motorisée de l'ouvrant arrière). De plus, lors de l'assemblage complet du véhicule, il est préférable que les options soient intégrables en fin de ligne de production pour éviter de déstandardiser trop en amont de la ligne de production.

Selon l'invention, l'espace libre est situé entre un panneau supérieur et une doublure du corps principal

L'ouvrant arrière peut en outre comprendre une ou plusieurs des caractéristiques suivantes :
- le dispositif contenu dans le module comprend une lame aérodynamique mobile et un mécanisme motorisé d'actionnement de la lame aérodynamique mobile ;
- le dispositif compris dans le module comprend un mécanisme motorisé d'ouverture et de fermeture de l'ouvrant arrière ;
- le module est apte à être positionné dans l'espace libre à travers une ouverture ménagée en regard de l'avant du véhicule automobile lorsque l'ouvrant arrière est monté sur le véhicule automobile ;

- le module est apte à être positionné dans l'espace libre à travers une ouverture donnant sur l'arrière du véhicule automobile lorsque l'ouvrant arrière est monté sur le véhicule automobile ;
- l'ouvrant arrière comprend en outre un élément d'habillage apte à obturer au moins partiellement l'ouverture ménagée à l'arrière du corps principal ;
- la doublure et/ou le panneau supérieur d'une part et le module d'autre part comprennent des moyens apte à permettre le guidage du module lors de son insertion dans l'espace libre ;
- la doublure et/ou le panneau supérieur d'une part et le module d'autre part comprennent des moyens aptes à permettre le placement du module dans l'espace libre ;
- le module comprend des moyens aptes à permettre sa fixation sur une caisse de véhicule automobile ;
- le module est ouvert sur sa partie supérieure ;
- le module est étanche ;
- le module comprend en outre un élément apte à permettre la liaison entre au moins un faisceau de câbles du corps principal et au moins un circuit électrique du véhicule automobile.

Nous allons maintenant présenter un mode de réalisation de l'invention donné à titre d'exemple non limitatif et à l'appui des figures annexées sur lesquelles :
- la figure 1 est une vue en coupe de la partie supérieure d'un ouvrant arrière selon l'invention ;
- la figure 2 est une vue en coupe de la partie supérieure du corps principal seul de la figure 1 ;
- la figure 3 est une vue en coupe du module seul de la figure 1 ;
- la figure 4 est une vue éclatée du boitier du module des figures 1 et 3 ;
- les figures 5 et 6 représentent un procédé de mise en place du module de la figure 3 à l'intérieur de la partie supérieure du corps principal de la figure 2 ;
- la figure 7 est une vue en en perspective du corps principal d'un ouvrant arrière non couvert par l'invention ;
- la figure 8 est une vue de dessus d'un module selon un mode de réalisation de l'invention ; et
- la figure 9 est une vue en coupe de la partie supérieure du corps principal de la figure 7 avec le module de la figure 8, l'ensemble formant la partie supérieure d'un ouvrant arrière non couvert par l'invention.

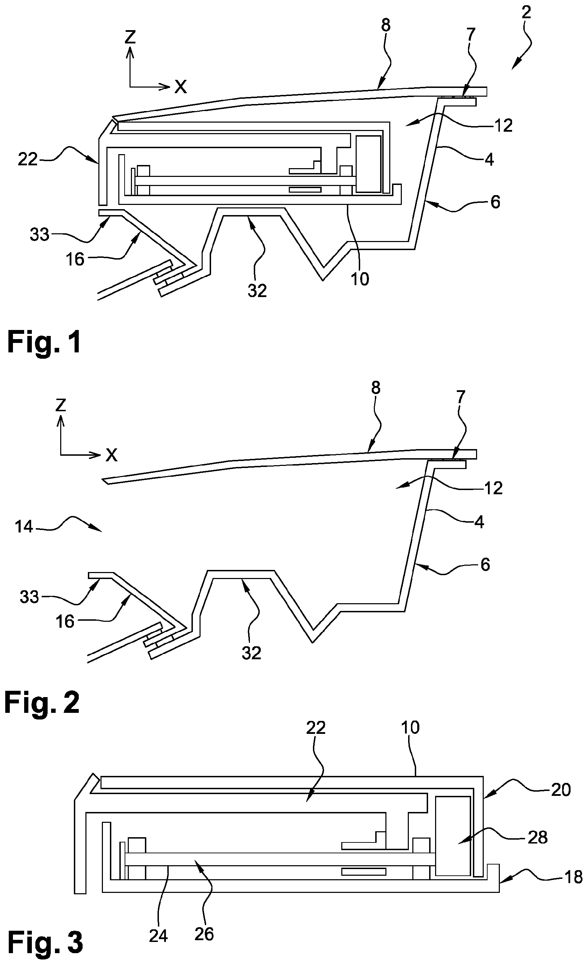

On se réfère maintenant à la figure 1 représentant une partie supérieure d'un ouvrant arrière 2 de véhicule automobile comprenant un corps principal 4 comprenant une doublure 6 et un panneau supérieur 8, et un module 10 amovible par rapport au corps principal 4, le corps principal 4 définissant un espace libre 12 dans lequel le module 10 peut être positionné. On appelle module un caisson dans lequel peuvent être disposés différents dispositifs tel qu'une lame aérodynamique mobile ou encore un mécanisme d'ouverture motorisée de l'ouvrant arrière.

La partie supérieure du corps principal 4 peut également être qualifiée de « zone becquet ».

Le corps principal 4 peut comprendre, en plus de la doublure 6 et du panneau supérieur 8, d'autres éléments tels qu'un panneau inférieur, une serrure, des blocs optiques, une lunette arrière, etc.

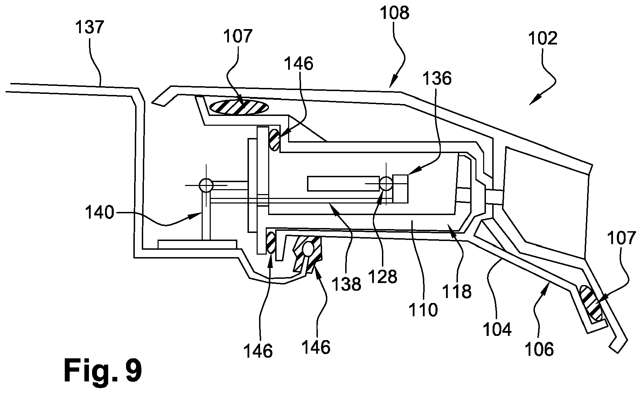

Dans l'exemple illustré sur les figures 1 et 2, on constate que la doublure 6 et le panneau supérieur 8 sont reliés l'un à l'autre, de manière classique par un cordon de collage 7 (tout autre moyen de fixation communément utilisé peut également être envisagé). Ils délimitent entre eux l'espace libre 12. Il est également possible, dans un exemple non couvert par l'invention, que l'espace libre 12 ne soit pas délimité conjointement par la doublure 6 et le panneau supérieur 8 mais seulement par un seul de ces deux éléments (voir par exemple la figure 9).

Le corps principal 4 comprend en outre une ouverture 14 par laquelle il est possible d'insérer ou retirer le module 10 dans l'espace libre 12 lors de son assemblage dans l'ouvrant arrière ou lors d'une opération de réparation. L'ouverture 14 est située ici à l'arrière du corps principal 4 (voir figure 2). La notion d'avant et d'arrière se comprend ici par référence à l'orientation usuelle des véhicules automobiles. Il est toutefois envisageable, comme nous le verrons ultérieurement, que l'ouverture 14 permettant un accès à l'espace libre soit située à l'avant du corps principal 4.

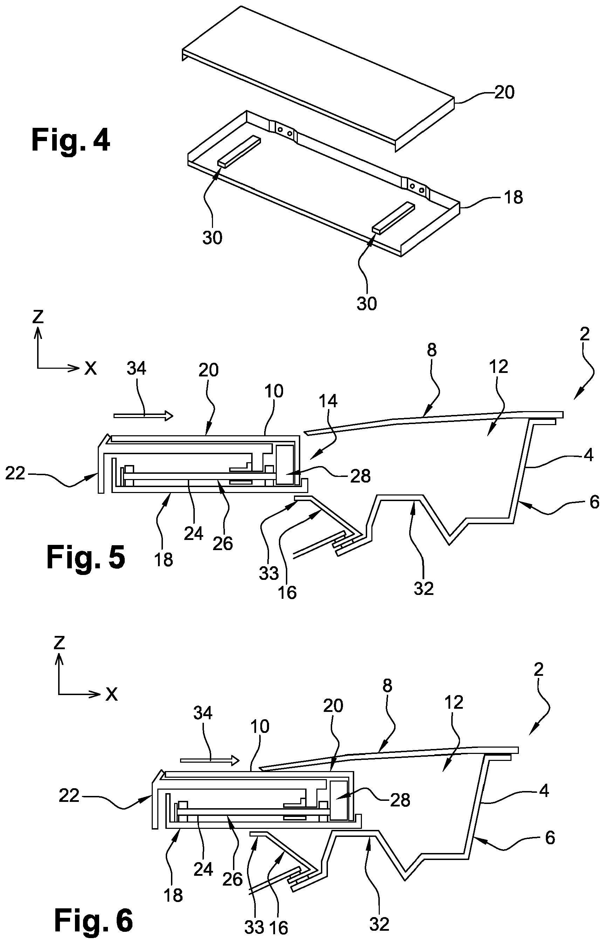

Dans l'exemple représenté sur la figure 2, le corps principal 4 peut comprendre un élément d'habillage 16 apte à obturer au moins partiellement l'ouverture 14 du corps principal 4 lorsque le module 10 est placé à l'intérieur de l'espace libre 12. L'élément d'habillage est, sur la figure 2 (mais également sur les figures 5 et 6 que nous aborderons ultérieurement), placé sur le corps principal 4 avant insertion du module 10 à l'intérieur de l'espace libre 12. Il est alternativement possible que l'élément d'habillage 16 ne soit rapporté sur le corps principal 4 qu'après mise en place du module 10 dans l'espace libre 12 ou éventuellement sur le module 10 et ce afin de faciliter la mise en place et un possible retrait du module 10 grâce à une ouverture 14 plus grande. Dans ce cas de figure, l'ouverture 14 par laquelle le module 10 peut être insérée peut être considérée comme l'espace disponible donnant l'accessibilité à l"entrée de l'espace libre 12 délimité entre le panneau supérieur 8 et la doublure 6. Il est alors intéressant d'envisager des moyens de fixation de l'élément d'habillage 16 au corps principal 4 et potentiellement au module 10 permettant une fixation amovible de l'élément d'habillage. Dans le cas représenté sur la figure 2, une fixation inamovible de l'élément d'habillage 16 au corps principal 4 est possible.

Dans le cas de figure illustré aux figures 5 et 6, c'est-à-dire celui dans lequel l'élément d'habillage 16 est présent sur l'ouvrant arrière avant insertion du module 10, l'ouverture 14 peut être considérée comme l'espace délimité entre le panneau supérieur 8 et l'élément d'habillage 16 fixé au corps principal 4.

Il est également envisageable que l'ouverture 14 soit totalement obturée, après insertion du module 10, par l'élément d'habillage qui peut être un troisième feu stop fixé de manière amovible à l'ouvrant arrière. Le troisième feu stop peut également être fixé au module 10 afin de venir obturer l'ouverture 14 lors de l'insertion du module 10 dans l'espace libre 12.

Comme représenté sur les figures 3 et 4, le module 10 peut comprendre une partie inférieure 18 et une partie supérieure 20. Alternativement, et comme nous le verrons par la suite, il est possible que le module 10 ne comprenne qu'une partie inférieure 18 et soit ouvert sur sa partie supérieure, ce qui évite de doubler les épaisseurs dans l'ouvrant arrière 2 (partie supérieure 20 en double paroi du panneau supérieur 8) et donc diminue les contraintes d'encombrement dans un espace relativement réduit en plus d'alléger le produit fini. La partie supérieure 20 et la partie inférieure 18 peuvent être reliées l'une à l'autre par l'intermédiaire de moyens de fixation réversibles tels que des vis, des clips, ou tout autre moyen permettant un démontage sans détérioration. Cela permet d'ouvrir le module 10 en cas de nécessité de réparation. Préférentiellement, cette fixation permet de garantir l'étanchéité (par exemple à l'humidité ou encore à la poussière afin d'éviter l'intrusion d'eau ou de poussière à l'intérieur du module pouvant générer une rétention) du module 10, par exemple en utilisant un joint.

Le module 10 comprend dans l'exemple illustré aux figures 1, 3, 5 et 6 une lame aérodynamique mobile 22 et un mécanisme motorisé 24 d'actionnement de cette dernière. Le mécanisme motorisé 24 comprend ici une vis sans fin 26 actionnée par l'intermédiaire d'un moteur 28. Cet actionnement réversible permet le déploiement et la rétraction de la lame aérodynamique mobile 22. Comme illustré sur les figures 1 et 6, l'ouverture 14 (qui est dans ce cas l'espace délimité entre le panneau supérieur 8 et l'élément d'habillage 16 fixé au corps principal 4) est obturée par une extrémité de la lame aérodynamique mobile 22. Nous verrons par la suite que le module motorisé peut comprendre d'autres mécanismes motorisés.

Afin de faciliter la mise en place du module 10 à l'intérieur de l'espace libre 12, la doublure 6 et/ou le panneau supérieur 8 d'une part et le module 10 d'autre part peuvent comprendre des moyens aptes à permettre le guidage du module motorisé 10 lors de son positionnement dans l'espace libre 12. Dans l'exemple représenté sur la figure 4, il peut par exemple s'agir de rails 30 présents sur la face externe inférieure 18 de la partie inférieure 18 du module 10 interagissant avec des rails complémentaires (non représentés) présents au niveau de la doublure 6. Tout autre moyen permettant un tel guidage est envisageable, le but étant d'avoir une mise en position aisée du module dans son logement et qui facilitera par la suite le maintien en position par les éléments de fixation. Le guidage est également assuré par le renfoncement 32 de la doublure 6 illustré aux figures 1, 2, 5 et 6, ce renfoncement 32 contribuant également au soutien du module 10 lorsque ce dernier est en position dans le corps principal 4.

Il est également possible que la doublure 6 et/ou le panneau supérieur 8 d'une part et le module 10 d'autre part comprennent des moyens aptes à permettre le bon positionnement final du module 10 dans l'espace libre. Ces moyens permettent d'assurer le bon positionnement final du module 10 à l'intérieur du corps principal 4, c'est-à-dire que le module 10 soit placé exactement à l'endroit où l'on souhaite le placer. Il peut par exemple s'agir d'une butée complémentaire des rails évoqués auparavant. Il pourrait également s'agir de protubérances en forme de cône présentes sur le module 10 ou la doublure 6 interagissant avec des creux en forme de cône complémentaires présents sur celui des deux éléments n'étant pas pourvu de protubérances. La forme des parois de l'ouverture 12 peut également permettre un centrage du module motorisé 10.

Une fois en position, le module 10 peut être fixé à la doublure 6 et/ou au panneau supérieur 8 par l'intermédiaire de moyens de fixation réversibles communément utilisés, par exemple des vis. Différents orifices sont alors prévus au préalable au niveau du module 10 et/ou du corps principal 4 afin de permettre la fixation du module 10 lorsque ce dernier est en bonne position à l'intérieur du corps principal 4.

Les figures 5 et 6 illustrent un exemple de procédé de mise en place du module 10 à l'intérieur de l'espace libre 12.

Dans l'exemple représenté, l'élément d'habillage 16 est déjà présent sur le corps principal lors de la mise en place du module 10. Comme vu auparavant, cela n'est pas forcément le cas. Une partie plane 33 de l'élément d'habillage 16 située dans le même plan que le renfoncement 32 va alors permettre un guidage lors du début de la mise en place du module motorisé 10 dans l'espace libre 12 puis 32 et 33 vont constituer le soutien du module.

Le module 10 est glissé à l'intérieur du corps principal 4 dans un sens représenté par la flèche 34. Comme expliqué auparavant, cette mise en place peut être facilitée par la présence de moyens de guidage du module 10 comme par exemple les rails 30 évoqués auparavant.

Le module 10 peut ensuite être maintenu dans une position et à un emplacement optimal grâce aux moyens de positionnement final évoqués auparavant tels que les protubérances et creux coniques décrits auparavant. Il est alors possible de fixer de manière réversible le module 10 au corps principal 4 (à la doublure et/ou au panneau supérieur) comme évoqué précédemment.

En cas de dysfonctionnement du module 10 ou pour toute autre raison nécessitant son retrait du corps principal 4, il est alors possible de retirer les fixations réversibles entre le module motorisé 10 et le corps principal 4 puis de sortir le module motorisé, sortie pouvant être facilitée par la présence des moyens de guidage. Si l'élément d'habillage 16 est amovible, il peut alors être retiré avant extraction du module motorisé 10 afin de donner plus de libertés à l'opérateur en charge du retrait du module motorisé 10.

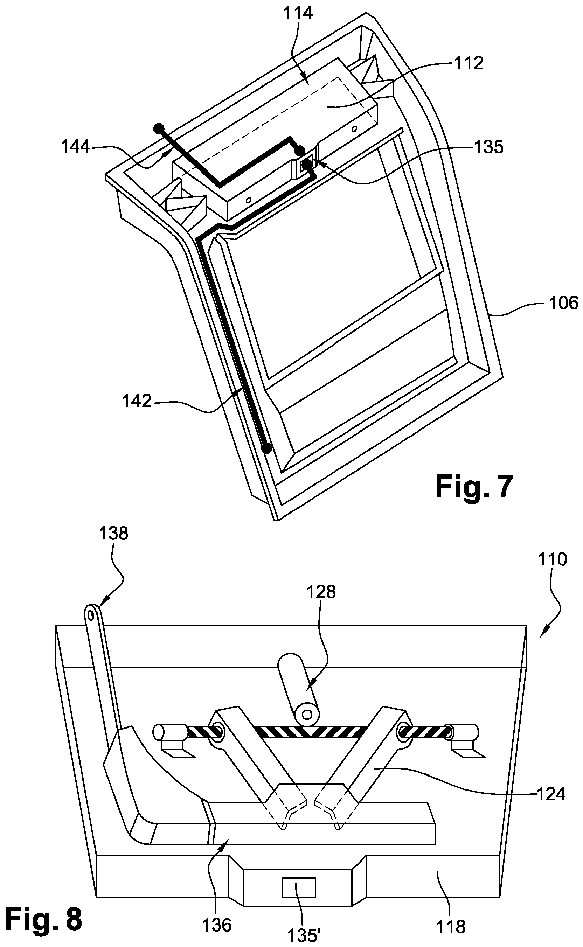

Les figures 7 à 9 illustrent respectivement une doublure 106 et la partie supérieure d'un ouvrant arrière 102 non couverts par l'invention, ainsi qu'un module 110 selon un mode de réalisation de l'invention. Cet ouvrant arrière 102 est apte à s'ouvrir et à se fermer de manière motorisée.

L'ouvrant arrière 102 comprend un corps principal 104 similaire au corps principal 4 au niveau des différents éléments le composant (doublure 106, panneau supérieur 108 collé à la doublure 106 par un cordon de collage 107, panneau inférieur, serrure, blocs optiques, etc.).

Le corps principal comprend un espace libre 112 débouchant vers l'avant du véhicule et accessible via une ouverture 114 orientée vers l'avant du véhicule. Comme nous l'avions expliqué auparavant et comme cela est visible sur les figures 7 et 9, le module 110 est apte à être positionné dans l'espace libre 112 à travers une ouverture 114 ménagée à l'avant du corps principal 104. Cette mise en place du module par l'avant peut présenter un avantage en termes de montage de l'ouvrant arrière 102 sur une caisse 137 du véhicule. En effet, au lieu de fixer directement l'ouvrant arrière 102 à la caisse 137, ce qui représente une opération difficile pour un opérateur du fait de la masse et des grandes dimensions de l'ouvrant arrière 102 ainsi de la position en hauteur des charnières, il est possible de fixer dans un premier temps le module 110 à la caisse 137 puis de guider et fixer le corps principal 104 sur le module 110. Cela permet de faciliter la tâche de l'opérateur en utilisant le module 110 comme intermédiaire d'assemblage et aussi de manipuler des composants de masse réduite. Alternativement à la présence d'une ouverture à l'avant ou à l'arrière du corps principal, il est envisageable d'avoir deux ouvertures à l'avant et à l'arrière offrant plusieurs possibilités de mise en place du module 10 ou 110 à l'opérateur.

Dans l'exemple illustré sur les figures 7 et 9 et non couvert par l'invention, et comme cela avait été dit auparavant, l'espace libre 112 est ici ménagé dans la doublure 106 qui présente une cavité adaptée pour y loger le module 110 (voir figure 9) et non plus réalisé par l'espace restant entre la doublure et le panneau supérieur. Des joints 146 peuvent permettre d'assurer l'étanchéité du module 110 monté sur l'ouvrant arrière.

Le module 110 représenté sur la figure 8 présente quelques différences avec le module 10. Le module 110 n'est composé que d'une partie inférieure 118 et est ouvert sur sa partie supérieure et ce dans une optique d'allègement et de réduction de l'encombrement comme expliqué plus haut. Il comprend un mécanisme motorisé 124 d'ouverture de l'ouvrant arrière 102 comprenant un moteur 128. Il s'agit d'un mécanisme standard permettant d'ouvrir des volets de poids différents. Il peut s'agir d'un mécanisme central 136 relié à un bras de liaison 138 traversant la partie inférieure 118 du module 110, bras de liaison 138 destiné à être relié à une charnière 140 présente sur la caisse 137, comme illustré sur la figure 9. Bien entendu, le module 110 pourrait comprendre, seul ou simultanément, un autre mécanisme motorisé, par exemple celui décrit sur la figure 3 destiné à mouvoir une lame aérodynamique mobile.

Le module motorisé 110 comprenant un mécanisme motorisé 124 d'ouverture de l'ouvrant arrière 102 peut être réalisé dans un matériau pouvant supporter les différentes contraintes exercées sur lui lors de l'ouverture et de la fermeture de l'ouvrant arrière 102. De plus, le module 110, et plus particulièrement la partie inférieure 118, est réalisé dans des matériaux lui permettant de supporter des contraintes dues à l'ouverture de l'ouvrant arrière.

Les parties supérieure 20 et inférieure 18 et 118 des modules 10 et 110 peuvent être fabriquées par moulage et être de dimensions différentes en fonction des composants et mécanismes à monter à l'intérieur.

En plus des différents orifices permettant la fixation du module 110 et d'éventuels moyens de guidage et de positionnement final du module 110 (orifices et moyens identiques ou différents de ceux des figures 1 à 6), la doublure 106 peut comprendre un orifice 135 permettant le passage d'éléments aptes à permettre la liaison entre au moins un faisceau de câbles 142 du corps principal 4 et le module 110.

Le module 110 comprend dans ce cas au moins un élément de connectique 135' permettant de relier au moins un faisceau de câbles 142 du corps principal 104 à au moins un circuit électrique 144 du véhicule automobile. Cela est applicable au module 10 et permet de centraliser les connexions électriques ce qui simplifie le travail de l'opérateur. Il peut s'agir un élément de type prise, d'un élément permettant un contact de type induction ou de tout autre élément permettant de relier facilement deux éléments afin d'en assurer la continuité électrique lorsque le système sera alimenté. Cet élément peut également être présent sur le module motorisé 10.

La mise en place et le retrait du module motorisé 110 dans le corps principal 104 sont similaires à ceux du module motorisé 10 dans le corps principal 4 à l'exception du fait qu'il est envisageable de disposer dans un premier temps le module motorisé 110 sur la caisse 137 du véhicule automobile puis le corps principal 104 sur le module motorisé 10. Aussi, il y a une étape de liaison du bras de liaison 138 à la charnière 140 de la caisse 137.

L'invention n'est pas limitée aux modes de réalisation présentés et d'autres modes de réalisation apparaîtront clairement à l'homme du métier.

Il est notamment possible de d'incorporer au module motorisé différents éléments comme par exemple des radars, des capteurs, une antenne, le troisième feu stop, un générateur de vortex, etc.

### Nomenclature

**1^{er} mode de réalisation**
   2 : ouvrant arrière
   4 : corps principal
   6 : doublure
   7 : cordon de collage
   8 : panneau supérieur
   10 : module motorisé
   12 : espace libre
   14 : ouverture
   16 : élément d'habillage
   18 : partie inférieure
   20 : partie supérieure
   22 : lame aérodynamique mobile
   24 : mécanisme motorisé d'activation de la lame aérodynamique mobile
   26 : vis sans fin
   28 : moteur
   30 : rails
   32 : renfoncement
   33 : partie plane de l'élément d'habillage
   34 : sens d'insertion du module motorisé
**2^{nd} mode de réalisation**
   102 : ouvrant arrière
   104 : corps principal
   106 : doublure
   107 : cordon de collage
   108 : panneau supérieur
   110 : module motorisé
   112 : espace libre
   114 : ouverture
   118 : partie inférieure
   124 : mécanisme motorisé d'ouverture de l'ouvrant arrière
   128 : moteur
   135 : orifice pour connectique
   135' : élément de connectique
   136 : mécanisme central
   137 : caisse du véhicule
   138 : bras de liaison
   140 : charnières
   142 : faisceau de câbles du corps principal
   144 : faisceau de câbles du véhicule
   146 : joints d'étanchéité

## Revendications

1. Ouvrant arrière (2 ; 102) de véhicule automobile **caractérisé en ce qu'**il comprend :
- un corps principal (4 ; 104), et
- un module (10 ; 110) amovible par rapport au corps principal (4 ; 104) apte à accueillir un dispositif (24 ; 124),
le corps principal (4 ; 104) comprenant un espace libre (12 ; 112) accessible par une ouverture (14 ; 114), l'espace libre (12 ; 112) et l'ouverture (14 ; 114) étant dimensionnés pour permettre l'insertion et le retrait du module (10 ; 110) du corps principal (4 ; 104), **caractérise en ce que** l'espace libre (12 ; 112) étant situé entre un panneau supérieur (8 108) et une doublure (6 ; 106) du corps principal (4 ; 104).

2. Ouvrant arrière (2 ; 102) selon la revendication 1, dans lequel le dispositif contenu dans le module (10 ; 110) comprend une lame aérodynamique mobile (22) et un mécanisme motorisé (24) d'actionnement de la lame aérodynamique mobile (22).

3. Ouvrant arrière (2 ; 102) selon la revendication 1, dans lequel dispositif contenu dans le module (10 ; 110) comprend un mécanisme motorisé (124) d'ouverture et de fermeture de l'ouvrant arrière (2 ; 102).

4. Ouvrant arrière (2 ; 102) selon l'une quelconque des revendications précédentes, dans lequel le module (10 ; 110) est apte à être positionné dans l'espace libre (12 ; 112) à travers une ouverture (114) ménagée en regard de l'avant du véhicule automobile lorsque l'ouvrant arrière (2 ; 102) est monté sur le véhicule automobile.

5. Ouvrant arrière (2 ; 102) selon l'une quelconque des revendications précédentes, dans lequel le module (10 ; 110) est apte à être positionné dans l'espace libre (12 ; 112) à travers une ouverture (14) donnant sur l'arrière du véhicule lorsque l'ouvrant arrière (2 ; 102) est monté sur le véhicule automobile.

6. Ouvrant arrière (2 ; 102) selon la revendication précédente, l'ouvrant arrière (2 ; 102) comprenant en outre un élément d'habillage (16) apte à obturer au moins partiellement l'ouverture (14) ménagée à l'arrière du corps principal.

7. Ouvrant arrière (2 ; 102) selon l'une quelconque des revendications précédentes, dans lequel la doublure (6 ; 106) et/ou le panneau supérieur (8 ; 108) d'une part et le module (10 ; 110) d'autre part comprennent des moyens (30) apte à permettre le guidage du module (10 ; 110) lors de son insertion dans l'espace libre (12 ; 112).

8. Ouvrant arrière (2 ; 102) selon l'une quelconque des revendications précédentes, dans lequel la doublure (6 ; 106) et/ou le panneau supérieur (8 ; 108) d'une part et le module (10 ; 110) d'autre part comprennent des moyens aptes à permettre le placement du module (10 ; 110) dans l'espace libre (12 ; 112).

9. Ouvrant arrière (2 ; 102) selon l'une quelconque des revendications précédentes, dans lequel le module (10 ; 110) comprend des moyens aptes à permettre sa fixation sur une caisse de véhicule automobile.

10. Ouvrant arrière (2 ; 102) selon l'une quelconque des revendications précédentes, dans lequel le module (10 ; 110) est ouvert sur sa partie supérieure.

11. Ouvrant arrière (2 ; 102) selon l'une quelconque des revendications 1 à 9, dans lequel le module (10) est étanche.

12. Ouvrant arrière (2 ; 102) selon l'une quelconque des revendications précédentes, dans lequel le module (10 ; 110) comprend en outre un élément (135') apte à permettre la liaison entre au moins un faisceau de câbles (142) du corps principal (104) et au moins un circuit électrique du véhicule automobile.

## Patentansprüche

1. Heckklappe (2; 102) eines Kraftfahrzeugs, **dadurch gekennzeichnet, dass** es umfasst:
- einen Hauptkörper (4; 104) und
- ein Modul (10; 110), das relativ zu dem Hauptkörper (4; 104) entfernbar ist und imstande ist, eine Vorrichtung (24; 124) aufzunehmen,
wobei der Hauptkörper (4; 104) einen freien Raum (12; 112) umfasst, der über eine Öffnung (14; 114) zugänglich ist, wobei der freie Raum (12; 112) und die Öffnung (14; 114) so dimensioniert sind, dass sie das Einbringen und das Entfernen des Moduls (10; 110) von dem Hauptkörper (4; 104) gestatten,
**dadurch gekennzeichnet, dass** der freie Raum (12; 112) sich zwischen einer oberen Platte (8; 108) und einer Auskleidung (6; 106) des Hauptkörpers (4; 104) befindet.

2. Heckklappe (2; 102) nach Anspruch 1, wobei die in dem Modul (10; 110) enthaltene Vorrichtung eine bewegliche aerodynamische Lamelle (22) und einen motorbetriebenen Mechanismus (24) zum Betätigen der beweglichen aerodynamischen Lamelle (22) umfasst.

3. Heckklappe (2; 102) nach Anspruch 1, wobei die in dem Modul (10; 110) enthaltene Vorrichtung einen motorbetriebenen Mechanismus (24) zum Öffnen und zum Schließen der Heckklappe (2; 102) umfasst.

4. Heckklappe (2; 102) nach einem der vorhergehenden Ansprüche, wobei das Modul (10; 110) in dem freien Raum (12; 112) durch eine gegenüber der vorderen Seite des Kraftfahrzeugs vorgesehene Öffnung (114) hindurch positionierbar ist, wenn die Heckklappe (2; 102) an dem Kraftfahrzeug montiert ist.

5. Heckklappe (2; 102) nach einem der vorhergehenden Ansprüche, wobei das Modul (10; 110) in dem freien Raum (12; 112) durch eine zu der hinteren Seite des Kraftfahrzeugs weisende Öffnung (14) hindurch positionierbar ist, wenn die Heckklappe (2; 102) an dem Kraftfahrzeug montiert ist.

6. Heckklappe (2; 102) nach dem vorhergehenden Anspruch, wobei die Heckklappe (2; 102) ferner ein Verkleidungselement (16) umfasst, das imstande ist, die an der hinteren Seite des Hauptkörpers vorgesehene Öffnung (14) wenigstens teilweise zu verschließen.

7. Heckklappe (2; 102) nach einem der vorhergehenden Ansprüche, wobei die Auskleidung (6; 106) und/oder die obere Platte (8; 108) einerseits und das Modul (10; 110) andererseits Mittel (30) umfassen, die imstande sind, die Führung des Moduls (10; 110) bei seinem Einbringen in den freien Raum (12; 112) zu gestatten.

8. Heckklappe (2; 102) nach einem der vorhergehenden Ansprüche, wobei die Auskleidung (6; 106) und/oder die obere Platte (8; 108) einerseits und das Modul (10; 110) andererseits Mittel umfassen, die imstande sind, das Platzieren des Moduls (10; 110) in dem freien Raum (12; 112) zu gestatten.

9. Heckklappe (2; 102) nach einem der vorhergehenden Ansprüche, wobei das Modul (10; 110) Mittel umfasst, die imstande sind, dessen Befestigung an einer Kraftfahrzeugkarosserie zu gestatten.

10. Heckklappe (2; 102) nach einem der vorhergehenden Ansprüche, wobei das Modul (10; 110) an seinem oberen Teil offen ist.

11. Heckklappe (2; 102) nach einem der Ansprüche 1 bis 9, wobei das Modul (10) abgedichtet ist.

12. Heckklappe (2; 102) nach einem der vorhergehenden Ansprüche, wobei das Modul (10; 110) ferner ein Element (135') umfasst, das imstande ist, die Verbindung zwischen wenigstens einem Kabelbündel (142) des Hauptkörpers (104) und wenigstens einem Stromkreis des Kraftfahrzeugs zu gestatten.

## Claims

1. A rear opening (2; 102) of a motor vehicle comprising:
- a main body (4; 104), and
- a module (10; 110) removable from the main body (4; 104) adapted to receive a device (24; 124),
the main body (4; 104) including a free space (12; 112) accessible through an opening (14; 114), the free space (12; 112) and the opening (14; 114) being sized to allow inserting and removing the module (10; 110) from the main body (4; 104), **characterized in that** the free space (12; 112) is located between an upper panel (8; 108) and a liner (6; 106) of the main body (4; 104).

2. A rear opening (2; 102) according to claim 1, wherein the device contained in the module (10; 110) comprises a movable aerodynamic blade (22) and a motorized actuating mechanism (24) of the movable aerodynamic blade (22).

3. A rear opening (2; 102) according to claim 1, wherein the device contained in the module (10; 110) comprises a motorized mechanism (124) opening and closing the rear opening (2; 102).

4. A rear opening (2; 102) according to any one of the preceding claims, wherein the module (10; 110) is adapted to be positioned in the free space (12; 112) through an opening (114) arranged facing the front of the motor vehicle when the rear opening (2; 102) is mounted on the motor vehicle.

5. A rear opening (2; 102) according to any one of the preceding claims, wherein the module (10; 110) is adapted to be positioned in the free space (12; 112) through an opening (14) on the rear of the vehicle when the rear opening (2; 102) is mounted on the motor vehicle.

6. A rear opening (2; 102) according to the preceding claim, the rear opening (2; 102) further comprising a covering element (16) able to close at least partially the opening (14) provided at the back of the main body.

7. A rear opening (2; 102) according to any one of the preceding claims, wherein the liner (6; 106) and/or the upper panel (8; 108) on the one hand and the module (10; 110) on the other hand comprise means (30) suitable for allow the guiding of the module (10; 110) during its insertion into the free space (12; 112).

8. A rear opening (2; 102) according to any one of the preceding claims, wherein the liner (6; 106) and/or the upper panel (8; 108) on the one hand and the module (10; 110) on the other hand comprise means able to allow the placement of the module (10; 110) in the free space (12; 112).

9. A rear opening (2; 102) according to any one of the preceding claims, wherein the module (10; 110) comprises means adapted to allow its attachment to a motor vehicle body.

10. A rear opening (2; 102) according to any one of the preceding claims, wherein the module (10; 110) is open on its upper part.

11. A rear opening (2; 102) according to any one of claims 1 to 9, wherein the module (10) is sealed.

12. A rear opening (2; 102) according to any one of the preceding claims, wherein the module (10; 110) further comprises an element (135') adapted to allow the connection between at least one wire harness (142) of the main body (104) and at least one electrical circuit of the motor vehicle.
